Europäisches Patentamt

**European Patent Office**

**Office européen des brevets**

(19)

(11) Numéro de publication: **0 144 255**
**A2**

# (12) DEMANDE DE BREVET EUROPEEN

(21) Numéro de dépôt: **84401948.9**

(22) Date de dépôt: **28.09.84**

(51) Int. Cl.⁴: **F 16 B 12/40**
**F 16 B 12/32, F 16 B 2/08**

(30) Priorité: **30.09.83 FR 8315619**

(43) Date de publication de la demande:
**12.06.85 Bulletin 85/24**

(84) Etats contractants désignés:
**CH DE FR GB IT LI SE**

(71) Demandeur: **NIVO S.A.**
**10, rue du Vieil-Abreuvoir**
**F-78100 Saint Germain en Laye(FR)**

(72) Inventeur: **Dinh, Didier**
**8 rue Emile Augier**
**F-78110 Le Vésinet(FR)**

(74) Mandataire: **Roger-Petit, Georges et al,**
**Office Blétry 2, boulevard de Strasbourg**
**F-75010 Paris(FR)**

(54) **Dispositifs de fixation de profilés pour mobilier.**

(57) Des profilés creux (2) de section droite circulaire ou polygonale sont fixés sur des éléments de montage (1) de section droite circulaire ou polygonale, à l'aide d'un embout (6) introduit dans l'extrémité d'un profilé (2), d'un câble de maintien (5) entourant un élément de montage (1) et d'un dispositif de mise sous tension du câble qui peut être un axe enrouleur (14) auquel est fixée une extrémité du câble et qui peut se déplacer dans une cavité de l'embout entre une position d'enroulage du câble et une position où l'axe est bloqué dans la cavité. Selon une variante, c'est la tête de l'embout qui est mobile par rapport au corps de l'embout et qui met sous tension une boucle de câble de longueur fixe.

./...

EP 0 144 255 A2

FIG.1

Dispositifs de fixation de profilés pour mobilier.

Depuis quelques années, les meubles constitués d'éléments modulaires se sont répandus, et parmi ceux-ci, les meubles constitués par des montants (tubes ou barres de section droite carrée, circulaire ou autre) assemblés horizontalement et verticalement, sur lesquels viennent se poser étagères, façades, portes ... Ces meubles sont très généralement vendus non assemblés "en kit" et sont montés par l'acheteur. Le procédé de montage et le dispositif de fixation des éléments les uns aux autres doivent donc être simples.

En règle générale, les montants sont reliés à l'aide de noeuds ou noix qui sont de deux types principaux : les montants sont fixés à l'aide d'une noix dans laquelle se glissent deux ou trois montants, la fixation se faisant par vissage d'un élément mobile de la noix. Ce dispositif présente de bonnes propriétés de rigidité de l'assemblage mais présente l'inconvénient de ne pas être coplanaire.

Selon un autre type, le montage se fait grâce à des éléments qui s'encastrent dans les montants ou dans lesquels s'encastrent les montants en permettant un assemblage coplanaire de ceux-ci. Toutefois, de tels systèmes ne permettent pas la superposition de plusieurs étages de montants de plus ou moins grande longueur, car ils manquent de rigidité.

D'autres dispositifs connus montrent l'utilisation de noix sur lesquelles des tiges de bois ou de métal sont fixées à l'aide de goupilles.

Dans la majeure partie des cas, les noix sont prévues pour orienter trois montants dans trois plans perpendiculaires les uns aux autres mais il est généralement possible d'adapter les noix à un autre nombre de montants dans des plans se coupant selon des angles autres que droits, en particulier lorsque l'on

**0144255**

sire réaliser une structure de type charpente.

La présente invention fournit des dispositifs de montage et de fixation de profilés creux sur des éléments de montage creux, comportant, en combinaison, un embout introduit dans l'extrémité d'un profilé creux, un câble de maintien entourant l'élément de montage et un dispositif de mise sous tension du câble, mobile dans une cavité de l'embout.

Les dispositifs de mise sous tension du câble sont de deux types principaux, décrits succintement ci-dessous :

1°) un premier type comporte un axe enrouleur, perpendiculaire à l'axe longitudinal de l'embout sur lequel est fixé le câble de maintien et qui peut prendre dans une cavité de l'embout une position active d'enroulage du câble et une position passive où l'axe est bloqué dans la cavité après serrage du câble de maintien formant une boucle de longueur variable.

2°) un second type comporte un dispositif coaxial à l'embout comportant un ensemble vis-écrou dont le déplacement entre une position rentrée et une position sortie assure la mise sous tension du câble de maintien qui forme une boucle de longueur fixe.

Dans le premier cas, le câble de serrage est fixé sur l'axe enrouleur au moins par l'une de ses extrémités ; l'autre étant ancrée dans l'embout ou sur l'axe enrouleur. Dans ce dernier cas, l'enroulement se fait de façon symétrique et permet une meilleure répartition de la tension de serrage.

La tête de l'embout forme un épaulement qui vient reposer sur l'extrémité du profilé creux et sa surface extérieure a une configuration lui permettant de s'adapter à l'élément de montage.

L'axe enrouleur comporte une roue dentée qui vient se bloquer dans un logement circulaire cranté lorsque l'on fait passer l'axe enrouleur de sa position active à sa position passive.

Dans le deuxième cas, le câble de serrage est fixé à ses deux extrémités sur l'embout. La tête de l'embout se prolonge par une tige filetée mobile dans un taraudage correspondant à l'intérieur du corps de l'embout, afin de permettre le déplacement relatif de la tête et du corps de l'embout.

Un écrou assure le blocage de la tête contre l'élément de montage.

Comme dans le premier cas, la surface extérieure de la tête de l'embout a une configuration lui permettant de s'adapter à l'élément de montage.

De tels embouts permettent la fixation de profilés creux, dans lesquels on introduit les embouts, sur des éléments de montage, et de façon générale ces éléments de montage seront eux aussi des profilés creux.

Les profilés creux ont une section droite circulaire, carrée, rectangulaire ou autre. Les éléments de montage auront en général la même section droite. Ainsi, dans le cas de profilés tubulaires, les éléments de montage seront soit tubulaires, soit sphérique, la tête de l'embout comportant un évidement concave de même rayon de courbure que le profilé. Dans le cas de profilés de section droite polygonale, les éléments de montage seront soit des profilés de section droite polygonale soit des polyèdres, la tête de l'embout étant alors constituée par une surface plate venant s'appuyer sur l'élément de montage. Il est également envisageable, en utilisant des embouts appropriés, de monter des profilés sur des éléments de montage de section droite différente, le corps de l'embout ayant une section droite correspondant à celle du profilé creux et la tête ayant une surface extérieure s'adaptant à celle de l'élément de montage.

L'embout est fixé au profilé creux à l'aide d'une goupille ou d'un élément similaire.

De façon générale, l'embout sera fixé au profilé en usine à l'aide d'une goupille rentrée à force dans des lumières correspondantes de l'embout et du profilé. La longueur du câble de maintien est telle qu'elle permet d'enfiler l'élément de montage dans la boucle du câble et d'amener le profilé à l'endroit de l'élément de montage où l'on désire le fixer. Mais il est possible de prévoir que l'embout sera introduit dans le profilé et fixé au moment du montage.

L'invention va maintenant être décrite en détail, en se référant à l'utilisation de profilés tubulaires, mais il est évident qu'elle n'est pas limitée à ceux-ci, les modifications à apporter étant évidentes.

La figure 1 est une vue en coupe d'un dispositif selon la présente invention, l'axe enrouleur étant en position de blocage.

La figure 2 est une vue partielle de l'embout et de l'axe enrouleur, en position d'enroulage.

La figure 3 est une vue en coupe d'une autre dispositif selon l'invention, l'axe enrouleur étant en position de blocage, le câble de serrage étant fixé à ses deux extrémités sur l'axe enrouleur.

La figure 4 est une vue en coupe d'encore un autre dispositif à axe enrouleur et les figures 4a et 4b sont des vues latérales de ce dispositif.

La figure 5 est une vue en perspective d'un dispositif de fixation du second type.

La figure 6 est une vue en coupe selon AA de la figure 5 du dispositif monté dans un profilé creux dont il assure la fixation sur un élément de montage.

Les figures 7 et 8 représentent deux possibilités de fixation de profilés tubulaires sur un même élément de montage.

La figure 9 représente la fixation d'un profilé tubulaire sur un autre type d'élément de montage.

Un certain nombre d'éléments sont communs aux deux types de dispositifs et portent les mêmes numéros de référence.

Les éléments de montage 1 sont de façon générale des profilés tubulaires identiques aux profilés tubulaires 2 que l'on fixe sur eux. Ce sont des tubes métalliques ayant par exemple un diamètre extérieur de 22 mm et un diamètre intérieur de 20 mm.

Des diamètres inférieurs ou supérieurs peuvent bien entendu être utilisés, les valeurs indiquées ci-dessus étant les valeurs optimales pour une utilisation pour l'édification d'étagères, bibliothèques..... Des valeurs supérieures seront utilisées lorsque la structure sera soumise à des efforts plus importants, par exemple lorsqu'elle sera destinée à porter des objets très lourds. Les tubes peuvent comporter des rainures circonférentielles, à intervalles réguliers de 10 cm par exemple, pour faciliter la pose des profilés mais ces rainures ne sont pas indispensables pour l'utilisation du dispositif de fixation.

L'élément de montage 1 peut également être une sphère, rainurée ou non (voir figure 8). Si les profilés ont une section droite polygonale, l'élément de montage prend la forme d'un polyèdre lorsque l'on désire édifier des structures du types charpente. La description suivante est faite en utilisant comme élément de montage 1 un profilé tubulaire similaire aux profilés tubulaires 2 que l'on vient fixer sur lui.

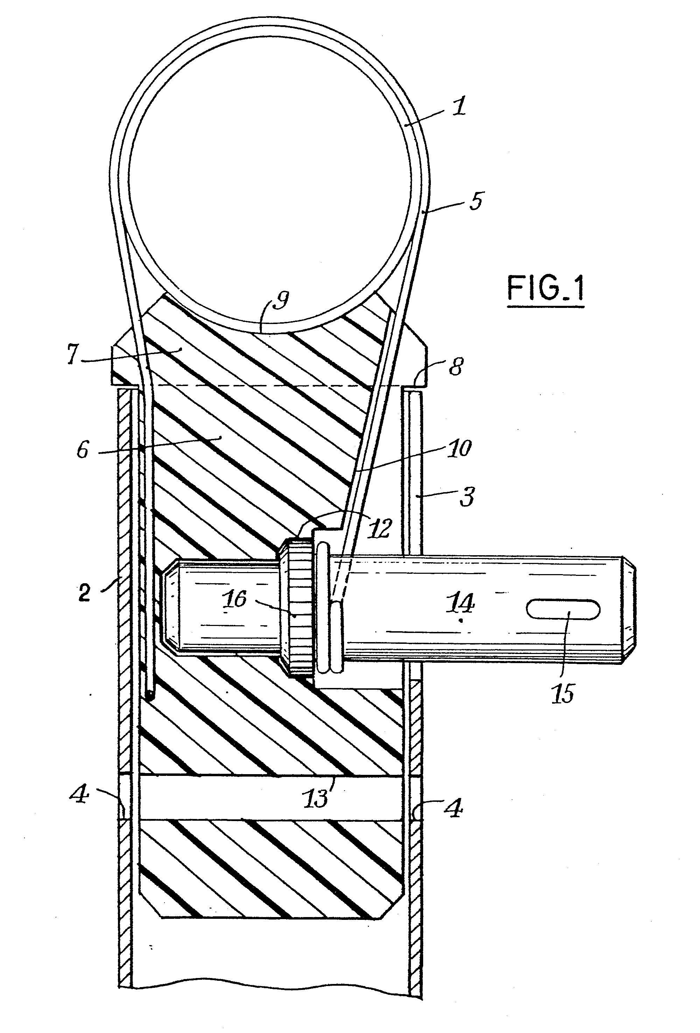

On va maintenant décrire le premier type de dispositif de fixation, pour lequel plusieurs variantes ont été mises au point (figures 1 à 4).

Le profilé tubulaire 2 comporte à son extrémité une encoche 3 permettant le passage du câble de serrage et de l'axe enrouleur. Une lumière 4 est pratiquée de part et d'autre du profilé tubulaire, au-delà de l'encoche en vue de l'introduction d'une goupille.

L'embout 6 comporte un corps essentiellement cylindrique et une tête 7 qui forme un épaulement 8 par rapport au corps de l'embout. La tête se termine par un évidement concave 9 dont le rayon de courbure correspond à celui de l'élément de montage 1, pour permettre l'application de la tête 7 contre le tube 1 lors du serrage du câble 5. L'embout est entaillé d'une gorge dont le fond 10 est oblique par rapport à l'axe longitudinal de l'embout. Cette gorge se termine par une cavité 11 pratiquée dans l'embout. Sur le mode de réalisation représenté, la cavité 11 comporte trois parties, la première cylindrique à paroi lisse, la deuxième cylindrique crantée, la troisième cylindrique à paroi lisse terminée par une section tronconique, le diamètre diminuant progressivement de la première à la troisième partie. L'embout comporte également une lumière 13 pour l'introduction d'une goupille.

L'embout est réalisé en matière plastique, par exemple résine acétal, et une extrémité du câble de serrage 5 est noyée sur une certaine longueur dans l'embout 6.

L'axe enrouleur 14 est constitué d'une première partie cylindrique à laquelle est fixée la deuxième extrémité du câble 5 et qui comporte une lumière 15 permettant l'introduction éventuelle d'une clé ou d'un outil de serrage ou desserrage. Le diamètre de cette première partie cylindrique est très légèrement inférieur à la largeur de l'encoche 3 de l'élément tubulaire 2 pour permettre le passage et le jeu de l'axe dans l'encoche.

Une roue dentée 16 d'un seul tenant avec l'axe enrouleur ou rendue solidaire de celui-ci a un diamètre extérieur supérieur à celui de l'encoche 3 et empêche l'axe de sortir complètement par celle-ci lorsqu'il se déplace perpendiculairement à l'axe de l'encoche. Une deuxième partie cylindrique prolonge l'axe au-delà de la roue dentée. Sur le mode de réalisation représenté, cette deuxième partie cylindrique a un diamètre inférieur à celui de l'axe enrouleur et a une extrémité tronconique mais ces deux caractéristiques ne sont pas indispensables. De même l'une des faces de la roue dentée (à gauche sur la figure 1) peut rejoindre la deuxième partie cylindrique de l'axe prolongeant la roue par une section tronconique.

La cavité 11 pratiquée dans l'embout a une configuration et des dimensions telles qu'il est possible d'y introduire la deuxième partie cylindrique de l'axe enrouleur et sa roue dentée, les dents de la roue venant se loger dans la partie cylindrique crantée 12 de la cavité 11.

La fixation de l'embout 6 dans le profilé creux sera généralement effectuée en usine. L'embout est introduit dans le tube 2 après introduction partielle de l'axe enrouleur dans la cavité 11 de telle sorte que la roue dentée se trouve à l'intérieur du tube 2, la première partie cylindrique de l'axe glissant dans l'encoche 3. L'embout est assujetti au tube 2 à l'aide d'une goupille (non représentée) introduite à force dans les lumières 4 et 13.

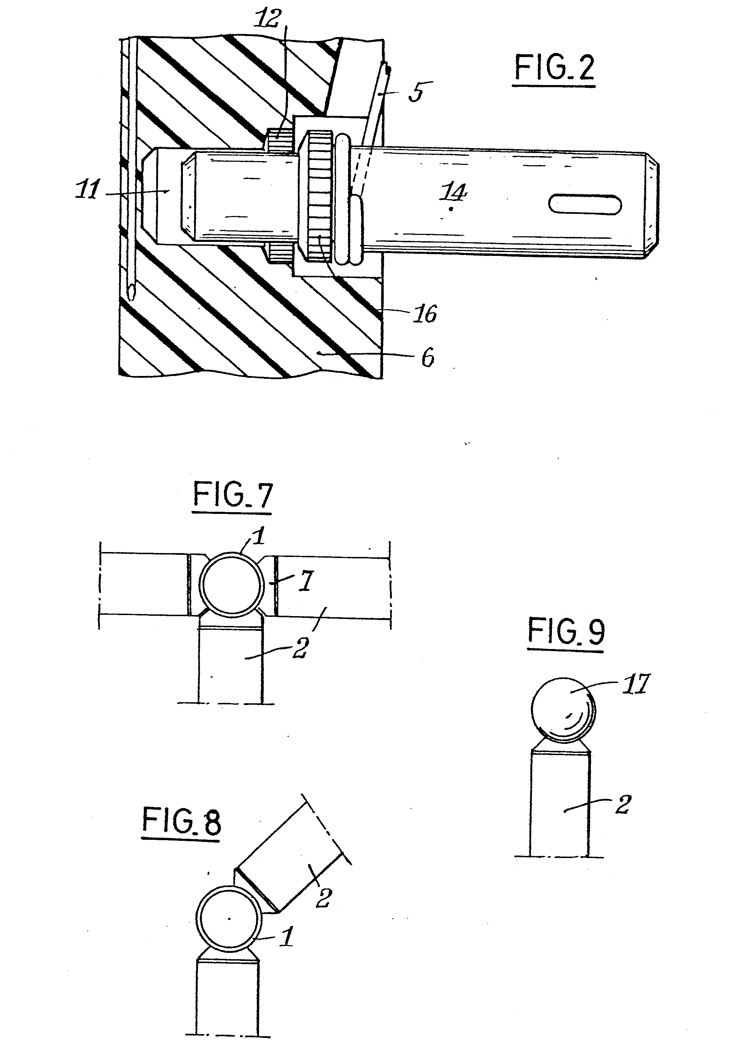

Le câble forme alors une boucle lâche à l'extrémité du profilé creux. L'élément de montage 1 est enfilé dans une ou plusieurs boucles de câble selon le nombre de profilés que l'on désire fixer sur le même élément de montage. On amène le profilé à la position voulue, on applique l'embout contre l'élément de montage et on enroule le câble sur l'axe enrouleur en faisant tourner celui-ci (dans le sens des aiguilles d'une montre pour le cas représenté sur les figures), l'axe étant au cours de cette opération maintenu dans la position active représentée sur la figure 2. Lorsque le serrage est suffisant, on pousse l'axe enrouleur pour l'enfoncer dans la cavité 11 et bloquer la roue dentée 16 dans le logement cranté 12, le câble reposant alors sur le fond 10 de la gorge. Le nombre de dents de la roue 16 est calculé pour que le jeu nécessaire pour introduire les dents dans les creux correspondants du logement 12 ne modifie pas de façon importante le degré désiré de serrage du câble.

Si on utilise pour la fixation de l'embout un dispositif plus facilement amovible qu'une goupille introduite à force, on peut prévoir l'introduction de l'embout dans le profilé au moment du montage et de la fixation du profilé sur l'élément de montage. L'embout est alors assujetti au profilé creux après enroulement du câble et blocage de la roue dentée dans le logement cranté.

D'autre tubes 2 peuvent ensuite être fixés sur l'élément 1 au même endroit ou à des endroits différents. Le tube 2 peut lui-même servir d'élément de montage 1 et on peut ainsi construire de proche en proche, une structure tubulaire sur laquelle on pourra fixer ou poser étagères, chants, fonds, portes et autres éléments.

La partie cylindrique extérieure de l'axe enrouleur 14 a, sur le mode de réalisation représenté, une longueur telle que l'axe enrouleur peut être tourné manuellement. La lumière 15 est prévue pour introduire une clé ou un outil afin de tirer l'axe pour le débloquer de sa position passive. Dans le cas représenté sur la figure 2, l'élément 1 étant horizontal et le tube 2 vertical, la partie de l'axe enrouleur 14 qui se trouve à l'extérieur du tube 2 peut servir de support à une étagère par exemple.

La longueur de l'axe enrouleur peut également être telle que son extrémité affleure le tube 2 lorsqu'il est dans sa position de blocage. Dans ce cas, la lumière 15 est supprimée et l'extrémité plate de l'axe enrouleur comporte une encoche permettant de le manoeuvrer pour enrouler le câble ou de bloquer et débloquer l'axe à l'aide d'un outil approprié.

Sur les figures 1 et 2, le câble 5 est représenté noyé sur une certaine distance dans l'embout 6. D'autres procédés d'ancrage bien connus sont également possibles, agrafage par exemple.

La tête 7 de l'embout 6 est représentée avec une partie droite et une partie effilée qui permet ou facilite la disposition de plusieurs éléments tubulaires 2 sur un même élément de montage 1 (figure 7) mais des variantes de forme et de dimension

8  0144255

de la tête sont évidemment utilisables.

Dans le cas où l'élément de montage 1 est une sphère 17 (figure 9), l'évidement 9 de la tête de l'embout a la forme d'une calotte sphérique et non d'une partie de cylindre.

Ce dispositif de fixation assure à l'ensemble d'éléments tubulaires une bonne résistance même si on assemble de grandes longueurs ou hauteurs avec plusieurs niveaux horizontaux et subdivisions verticales.

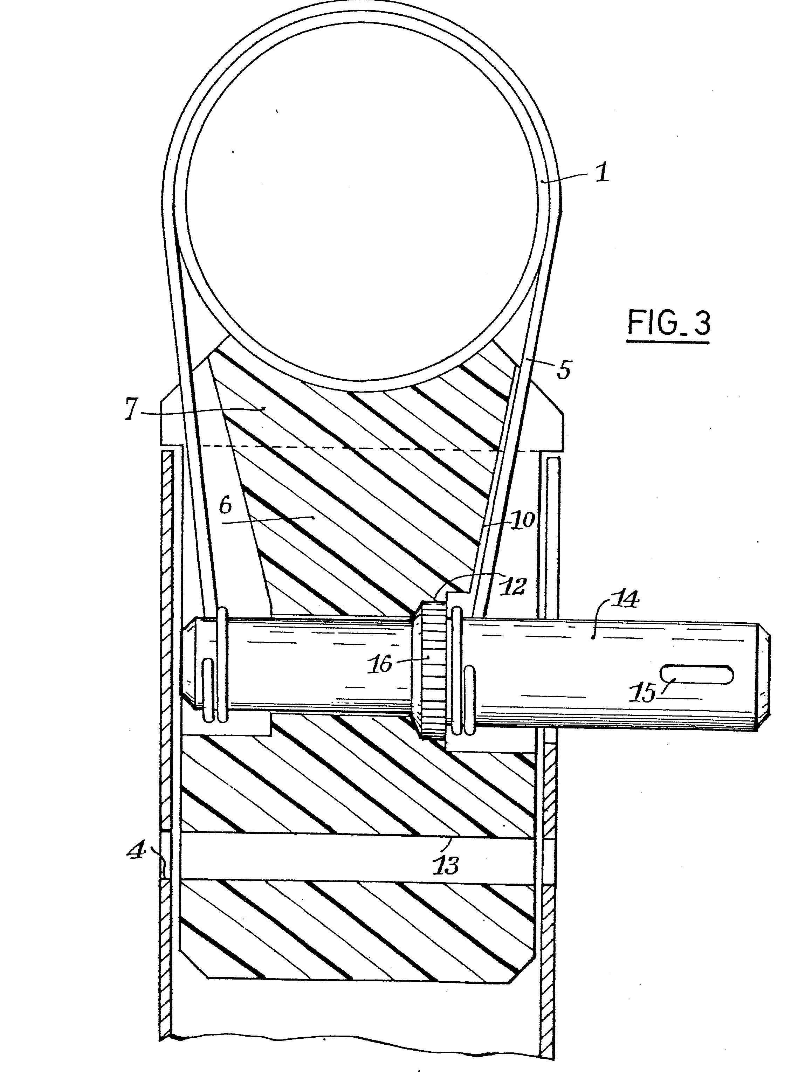

La figure 3 représente une variante de l'embout et de l'axe enrouleur selon la présente invention.

Dans ce cas les deux extrémités du câble de serrage sont fixées sur l'axe enrouleur et l'embout comporte deux gorges diamétralement opposées, la cavité 11 traversant l'embout de part en part pour permettre le passage de l'axe enrouleur dont l'extrémité vient affleurer la surface de l'embout lorsqu'il est en position de blocage. Cette fixation des deux extrémités du câble de serrage sur l'axe enrouleur permet un enroulement symétrique du câble et répartit mieux la tension de serrage. Ce mécanisme à double enroulement entraîne la nécessité d'utiliser un axe enrouleur dont la deuxième partie cylindrique a une plus grande longueur et convient mieux à des profilés tubulaires de plus grand diamètre, par exemple ayant un diamètre extérieur de 25 mm ou plus.

Les deux parties cylindriques de l'axe enrouleur ont alors  le même diamètre, ce qui n'est pas obligatoirement le cas dans le cas où une seule extrémité du câble est fixée à l'axe enrouleur.

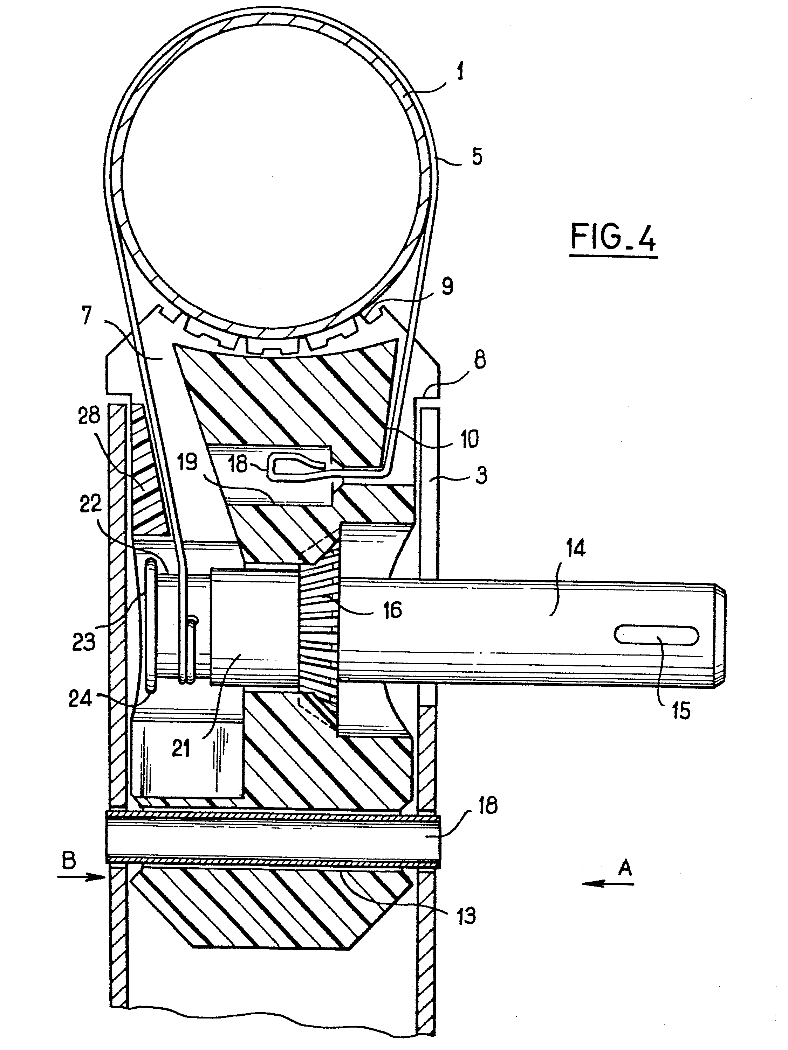

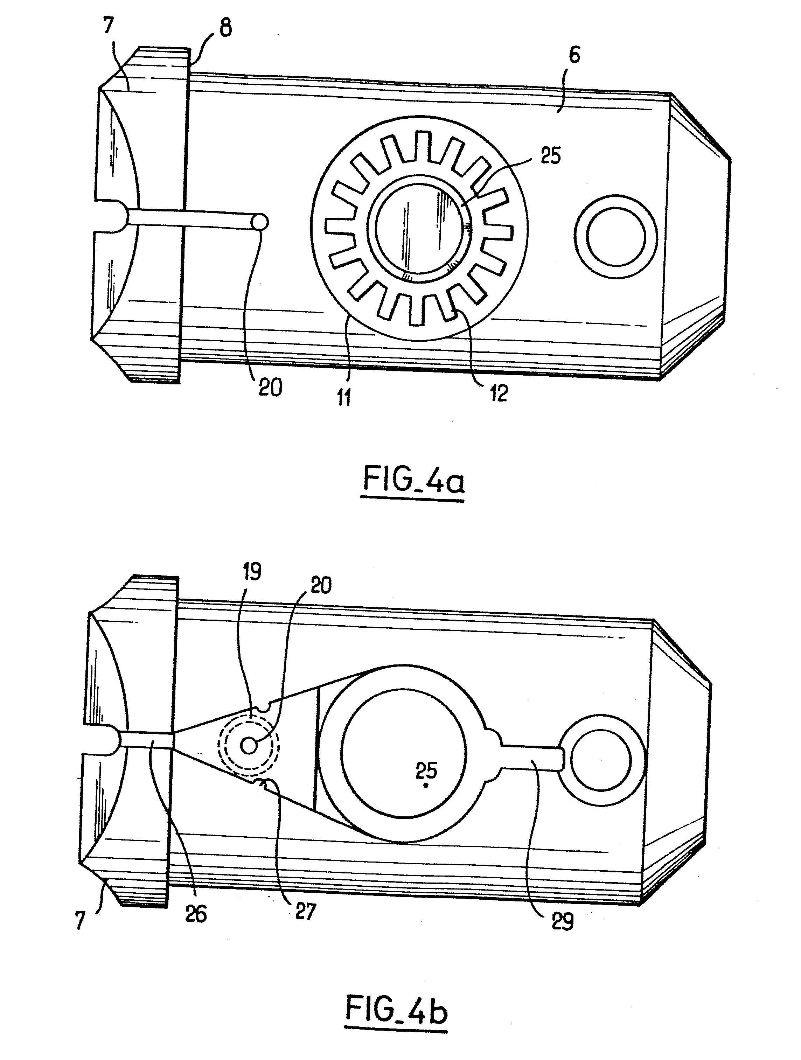

La figure 4 représente une coupe d'une autre variante dans laquelle une des extrémités du câble est fixée dans l'embout et l'autre est fixée sur l'axe enrouleur, mais sur sa deuxième partie cylindrique.

L'extrémité 18 du câble forme une agrafe insérée dans un trou 19 traversant le corps de l'embout et comportant un orifice reserré 20 empêchant    l'extrêmité du câble de sortir du trou 19.

L'autre extrémité du câble est fixée sur la deuxième partie cylindrique de l'axe enrouleur, dont l'extrémité a été légèrement modifiée par rapport aux variantes des figures 1 et 3. Au lieu d'être terminée par une section tronconique, la deuxième partie cylindrique 21 comporte une section 22 de  diamètre
légèrement inférieur sur laquelle viendra s'enrouler le câble
et se termine par une partie terminale 23 de diamètre supérieur
à celui de la section 22 mais inférieur ou égal à celui de la partie 21,  formant un rebord 24 empêchant le câble de glisser hors
de la partie cylindrique 21.

      La figure 4a et 46 représentent une vue de côté (selon
la flèche A de la figure 4) et une vue de côté (selon la flèche
B de la figure 4) de l'embout (le câble et l'axe enrouleur n'étant pas représentés). Sur la figure 4a, on voit le  corps 6 et
la tête 7 formant un rebord 8. La cavité 11 pratiquée dans le
corps de l'embout comporte une partie crantée 12  dans laquelle
viendra se bloquer la roue dentée de l'axe enrouleur. Au delà de
la partie crantée, la cavité 11 traverse le corps de l'embout en
formant un trou 25 dans lequel se déplacera l'axe enrouleur 12.
Ce trou débouche dans une cavité 11' de forme triangulaire terminée par une extrémité circulaire. La partie circulaire à fond
plat correspond à la cavité 11 et la partie triangulaire à fond
oblique permet de guider le câble et de l'amener à pénétrer dans
la gorge 26 pratiquée latéralement dans la tête 7. Deux nervures
27 faisant saillie vers l'intérieur de la partie triangulaire
permettent de retenir un coin triangulaire 28 (fig. 4) comportant
deux évidements correspondants, que l'on place dans la partie
triangulaire une fois le câble en place pour le maintenir à
l'intérieur de l'embout. A l'opposé de la partie triangulaire,
la cavité 11' se prolonge par une rainure 29. La forme de la
cavité 11' peut être modifiée, mais elle doit permettre l'introduction de l'extrémité 18 du câble dans son trou de fixation 19
et le guidage de l'autre extrémité du câble et sa fixation sur
la partie 21 de l'axe enrouleur.

      On notera que la tête comporte une gorge latérale 26a,
diamétralement opposée à la gorge 26, dans laquelle vient se
placer le câble sous tension.

      L'évidement 9 de la tête d'embout représentée sur la figure 4 est modifié par rapport à ceux des figures 1 et 2 en ce
qu'il comporte des rainures ou stries parallèles à l'axe de l'élément de montage 1. Ces rainures ou stries ont pour but d'augmenter
le frottement et d'améliorer la liaison  entre l'élément de montage 1 et le profilé 3 par l'intermédiaire de l'embout 6.

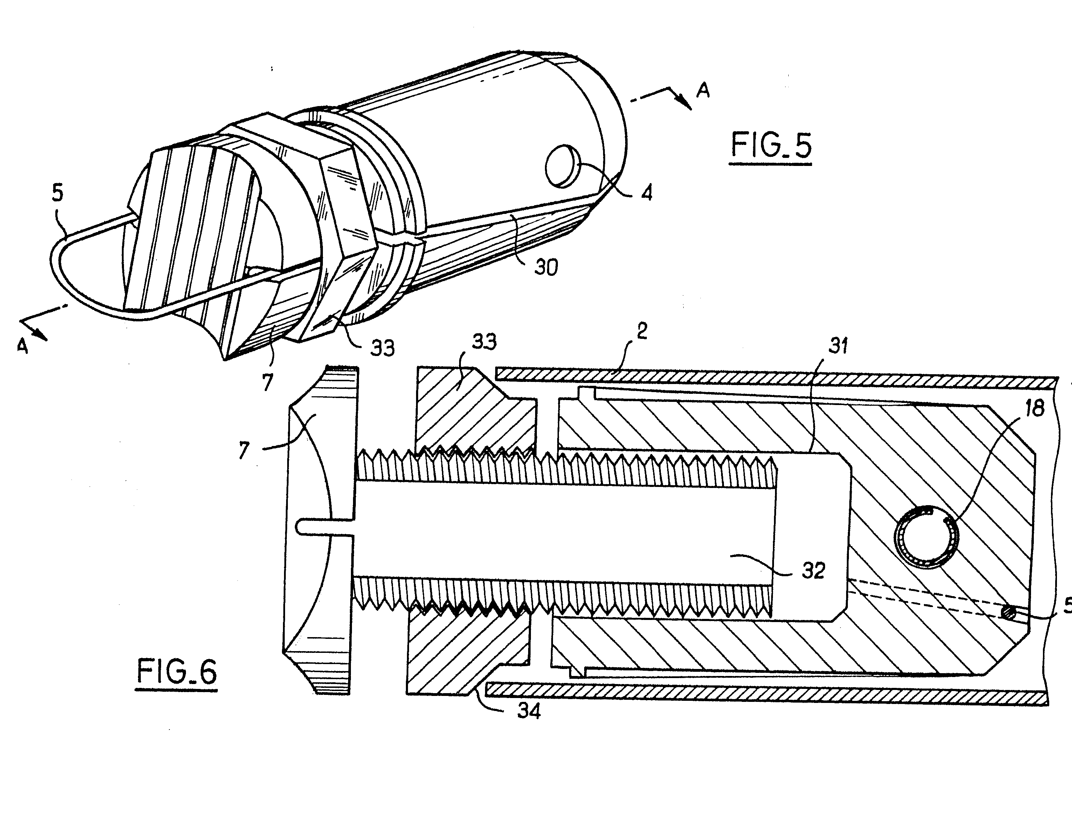

On va maintenant décrire un dispositif de fixation du second type, représenté sur les figures 5 et 6.

Dans un tel embout, le câble 5 forme une boucle fermée de longueur fixe et passe dans des gorges 30 diamétralement opposées creusées sur la longueur du corps de l'embout.

L'embout est constitué d'un corps cylindrique dont l'extrémité pénétrant dans le profilé creux 2 peut être tronconique. La tête 7 de l'embout est montée sur une tige filetée 32 pénétrant dans un taraudage 31 de dimensions correspondantes pratiqué dans l'embout. Un écrou 33, de forme extérieure hexagonale par exemple, est situé entre la tête et le corps de l'embout; la partie de l'écrou située du côté du corps de l'embout forme un épaulement 34 venant buter contre le profilé creux.

Dans ce mode de réalisation du dispositif de fixation, on ne reserre pas la boucle du câble autour de l'élément de montage mais on fait sortir la tête de l'embout de son corps en dévissant la tige 32 et on la bloque à la position désirée contre l'élément de montage à l'aide de l'écrou. La tête comporte comme dans les autres dispositifs un évidement de forme correspondant à celle de l'élément de montage, de préférence avec des rainures ou striés similaires à celles décrites pour l'évidement 9 du dispositif de la figure 4.

Des variantes de ce dispositif seront évidentes pour le spécialiste.

Bien entendu, dans tous les cas et comme indiqué précédemment, il est possible d'utiliser des profilés creux ayant une section droite polygonale en modifiant de façon appropriée la section droite de l'élément de montage et la tête de l'embout. Ces modifications seront évidentes dans le domaine et doivent être considérées comme faisant partie du domaine de l'invention.

REVENDICATIONS

--------------------

1. Dispositif de fixation de profilés creux sur des
éléments de montage, caractérisé en ce qu'il comporte, en combinaison, un embout (6) introduit dans l'extrémité d'un profilé
creux (2), un câble de maintien (5) entourant un élément de
montage (1) et un dispositif de mise sous tension (14; 32, 33)
du câble 5.

2. Dispositif selon la revendication 1, caractérisé en
ce que le dispositif de mise sous tension est un axe enrouleur
(14) auquel est fixée au moins une extrémité du câble et qui peut
se déplacer dans une cavité (11) entre une position active d'enroulage du câble et une position passive où l'axe est bloqué dans
la cavité.

3. Dispositif de fixation selon la revendication 2,
caractérisé en ce qu'une extrémité du câble de serrage est
ancrée dans l'embout.

4. Dispositif de fixation selon la revendication 2,
caractérisé en ce que les deux extrémités du câble de serrage
sont fixées à l'axe enrouleur.

5. Dispositif selon l'une quelconque des revendications
2 à 4, caractérisé en ce que l'axe enrouleur (14) comporte une
roue dentée (16) qui, lorsque l'axe enrouleur est mis en position de blocage, est bloquée dans un logement circulaire cranté
(12) dans la cavité (11) de l'embout.

6. Dispositif selon l'une quelconque des revendications
2 à 5, caractérisé en ce que le profilé creux (2) comporte une
encoche (3) dont la largeur est légèrement supérieure au diamètre de l'axe enrouleur (14) et inférieure au diamètre extérieur
de la roue dentée (16).

7. Dispositif selon la revendication 1, caractérisé en ce que le dispositif de mise sous tension du câble est constitué d'une tige filetée (32) portant la tête (7) de l'embout (6), se déplaçant dans un taraudage (31) pratiqué dans le corps de l'embout, et d'un écrou (33) bloquant la tige et l'embout à la position relative désirée.

8. Dispositif selon l'une quelconque des revendications 1 à 7, caractérisé en ce que l'embout (6) est fixé au profilé creux (2) à l'aide d'une goupille introduite à force dans une lumière (4) du profilé (2) et une lumière (13) de l'embout (6).

9. Dispositif selon l'une quelconque des revendications 1 à 8, caractérisé en ce que la partie de l'embout (6) située à l'extérieur du profilé creux comporte un épaulement (8 ; 34) venant reposer sur l'extrémité du profilé creux.

10. Dispositif selon l'une quelconque des revendications 1 à 9, caractérisé en ce que l'élément de montage a une section droite circulaire et la tête de l'embout comporte un évidement concave (9) ayant le même rayon de courbure que l'élément de montage (1).

11. Dispositif selon l'une quelconque des revendications 1 à 9, caractérisé en ce que l'élément de montage a une section droite polygonale et la surface extérieure de l'embout (6) est plane.

FIG.1

FIG.2

FIG.7

FIG.9

FIG.8

FIG. 3

0144255

FIG. 4

FIG_4a

FIG_4b

FIG.5

FIG.6

0144255